# EUROPEAN PATENT SPECIFICATION

(11) **EP 0 399 132 B1**
(45) Date of publication and mention of the grant of the patent: **16.03.1994**
(21) Application number: 89830236.9
(22) Date of filing: 25.05.1989
(51) Int. Cl.: A01K 13/00, A01J 7/00

(54) **Automatic teat-washer for cows or other milk-producing animals**
Automatische Zitzenreinigungsvorrichtung für Kühe oder andere Milchtiere
Dispositif automatique pour laver les trayons d'une vache ou autres animaux laitiers

(43) Date of publication of application: 28.11.1990
(73) Proprietor: GILNA CORPORATION N.V., Curaçao (AN)
(72) Inventor: Bodini, Francesco, I-26100 Cremona (IT); Bottazzi, Vittorio, I-Polesine Parmense(PR) (IT); Battistotti, Bruno, I-29100 Piacenza (IT); Soavi, Adriano, I-43100 Parma (IT); Rossi, Gabriele, I-26015 Soresina (CR) (IT)
(74) Representative: Perani, Aurelio

(56) References cited:
- WO-A-89/00378
- FR-A- 2 559 351

## Description

The present invention refers to an automatic device and to a method for washing the teats of the udders of cows or other milk-producing animals, before milking and for carrying away the residual liquid.

During milking some contamination of the environment is always caused, which is to a greater or lesser degree intense in relation to the general state of cleanliness of the udders and the general conditions of the milking parlour.

The free stall system of rearing dairy animals, which is by now widely used, and at the same time the widespread consumption of ensilaged fodder, cause situations in which the animal comes to be milked with its udder particularly dirty and soiled with fecal matter. The latter is, in its turn, full of micro-organisms coming from the ensilaged fodder, such as clostridia which represent the most dreaded form of bacteria in the production of cheeses, especially those seasoned for a long time.

The extent of the damage in the production of cheeses due to the clostridia responsible for butyric gas-producing fermentations is strictly correlated with the quantity of clostridia spores present in the milk.

These, in their turn, vary in number with the intensity of contamination of the milk, but just a few hundred spores per litre are sufficient to run the risk of a high proportion of waste in the cheese production.

Every device suitable for lessening the contamination of milk during milking is useful for improving the quality of the milk and for making its transformation into cheeses which are seasoned for a long time worthwhile economically.

All the measures which can be taken afterwards, to improve the quality of the milk which is already contamined, are expedients which are not completely effective, not always easy to put into practice, or in contrast with the need to keep the product natural. Thus, for example, the removal of spores at the same time as the general removal of bacteria from the milk, which can be achieved with the "tray floating" technique, is rendered difficult today because of the impoverishment in immunoglobulins of the milk, or the removal of the spores by the application of centrifugal force with a high gravitational field correlates, in practice, with the initial number of the spores and requires appropriate organization within the business concern in order for it to be applied rationally.

Having recourse to chemical or enzymic additives, or to both at the same time, is a course which cannot be justified technologically and which hinders the naturalness of the product and is causing an increasing number of reactions in the consumer, even if the additive has been demonstrated by experiments to be harmless in the doses used.

Therefore the teat washing and drying phases before milking take on particular importance.

These operations are at present carried out manually, usually without achieving complete cleanliness and without allowing the teat to be dry at the moment of its insertion into the milking teat.

The manual operation which is carried out today usually consists in wetting the teats with a water spray, followed by an uneven rubbing by hand, and in some cases further rubbing with a cloth or paper to dry them.

This operation is always far from perfect because of several factors, the main ones being the size of the udder, the morphology of the teats, the position of the cow, the height of the milker and the type of milking parlour, with the result that in practice contamination is always very high.

Washing the teats by hand, if it were desired to do it perfectly, would be very expensive and would never be easy to practice.

In addition the operator is never pleased to carry out this operation, especially in stalls with a large number of animals and in particular in winter, because continual direct contact of the hands with water becomes very unpleasant.

Mechanical devices have indeed also been proposed for the washing of udders, and an example is known from FR-A-2559351.

This device comprises a casing wherein two rotary brushes are active which rotate counter-directionally about parallel axes and are located close to an outlet opening in the casing.

The brushes have bristles which are slightly interleaved in an area adjacent to the opening, and the device also includes means for conveying washing liquids into said casing.

However, such a device has less than adequately thorough washing capabilities; for operating the device, in fact, the casing is brought close to the animal's udder to lead from above a teat into it through said opening, along a predetermined direction.

By rotating the brushes in a suitable direction, a suction is applied to the teat along the definite direction inwards the casing as the teat contacts their bristles.

The teat inside the casing will locate between the brushes while the operator holds the device by a purposely provided handgrip and moves it to have the teat cleansed over its entire longitudinal extent.

However, this prior device action is ineffective on the teat tip and root regions, these being unreachable regions despite the movement imparted to the device by the operator during the washing operation.

Consequently to this, those spores which have not been removed by the washing device will be sufficient to contaminate the milk end product, thereby spoiling virtually the whole teat washing measure.

Therefore the purpose of this present invention is to eliminate the aforesaid drawbacks, by foreseeing an extremely efficient, simply designed automatic device for washing and drying the tests of the udders of cows or other milk-producing animals.

This purpose is achieved with the device and the method according to the invention, as recited in the appended claims.

Such a device is very manoeuverable and easy for the operator to operate with one hand only, since he can regulate the teat washing and drying times as he wishes, by means of two levers located on the handle of the device.

Thus it is possible to obtain washing which is perfect and drying which is sufficient to avoid water passing into the milk, by means of rotating brushes controlling the sprays of water onto the teat.

The invention will now be described in an embodiment which is purely exemplary, and thereofre not restricting its realization, with reference to the appended drawings, in which:
- Fig. 1: is a top plan view of the teat-washer according to the invention;
- Fig. 2: is a side elevational view of the teat-washer, taken in the direction of the arrow F in fig. 1;
- Fig. 3: is a diagrammatic sectional view, taken along the line III-III in fig. 1;
- Fig. 4: is a diagrammatic sectional view, taken along the line IV-IV in fig. 2.

The teat-washer according to the invention is shown as a whole with reference number 1 and it consists substantially of two parts 2 and 3, suitable for housing the motor unit and the work unit of the device respectively, as will be explained more fully later.

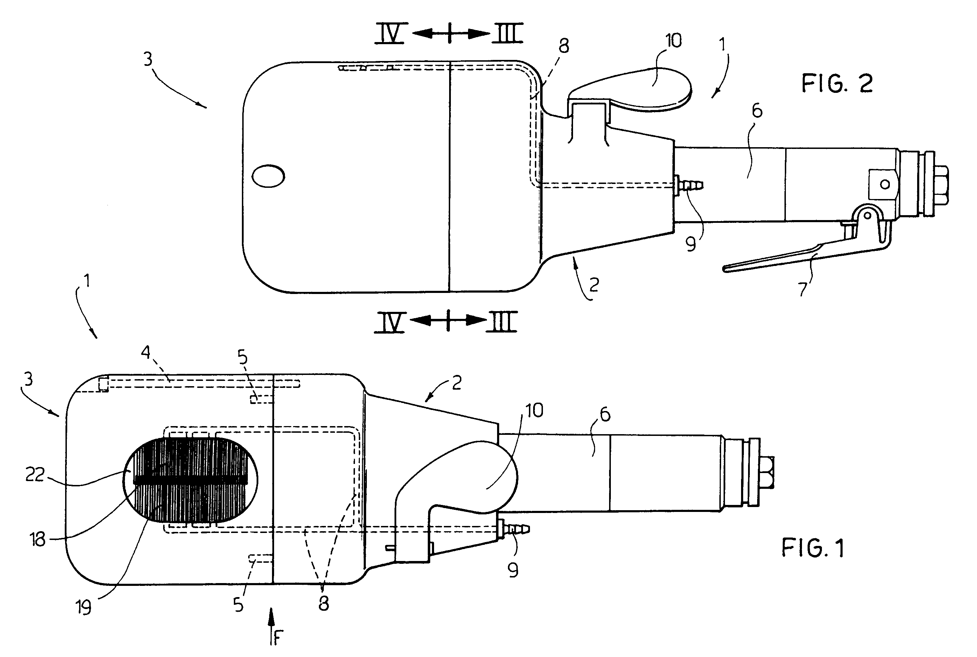

The two parts 2 and 3 are coupled and made integral to each other by means of tie rods 4, only one being shown with a dotted line in fig. 1. The coupling of the two parts is facilitated by appropriate gauge pins 5 (fig. 1).

A handle 6 is integral with part 2 of the device and the end of a pipe or cable is connected (not shown) to its free end for operating the motor unit, which is controlled by means of a lever 7 located on the lower part of the handle.

Also in part 2 of the device the hydraulic circuit is located for the distribution of the washing liquid, consisting of piping shown with reference number 8 in figs. 1 and 2, which extends into part 3 of the device to reach the work zone. The washing liquid is fed to the piping 8 by means of an external pipe (not shown) which is fitted to a rapid coupling 9 provided on part 2 of the device. The flow of the washing liquid is controlled by means of a lever 10 located on the upper part of the handle.

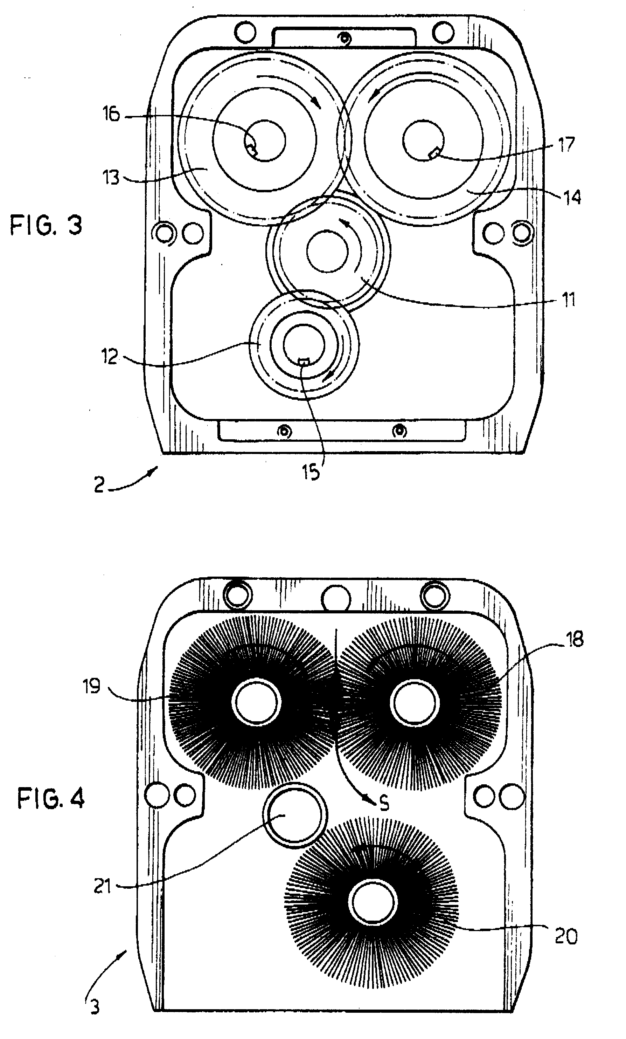

The motor unit provided inside part 2 of the device can be seen in fig. 3. It consists of wheelwork comprising particularly a central driving wheel 11, directly operated by the driving shaft, and three driven gears 12, 13, 14, the first two directly engaging with the wheel 11, while the wheel 14 is brought into rotation by the wheel 13; the rotational directions of the wheels 11-14 are shown with the arrows shown in fig. 3.

On the gear wheels, 12, 13, 14 mortises 15, 16, 17 are provided for receiving the shafts of the brushes foreseen on part 3 of the device, which will now be described with reference to fig. 4.

Two brushes of the same diameter 18, 19, crossing each other slightly, are provided on the upper part of the device and are located immediately below an upper opening 22 provided on part 3, as can be seen in fig. 1, for the teat to have access to such brushes.

Below the brushes 18, 19, which route in different directions from each other, as indicated by the arrows shown in fig. 4, an idle roller 21 is provided, positioned slightly offset to one side with respect to the centre line of the axis joining the centres of the two brushes 18, 19.

Below the idle roller 21 a third brush 20 is provided positioned offset to the other side with respect to the aforesaid centre line and rotating in the sense of the arrows shown in fig. 4.

The arrangement and the rotational directions of the brushers 18, 19, 20 and of the idle roller 21, are such that when the brushes are made to rotate, the teat of the cow's udders, having been introduced into the upper opening 22 of the device, is sucked into the upper counter-rotating brushes 18, 19 and diverted by the idle roller 21 towards the lower brush 20, as is substantially shown by the arrow S, in such a way that its tip is in the best situation for being cleaned by the brush 20.

As can be seen in fig. 3, the wheel 12 on which the brush 20 is mortised has a smaller diameter than the wheels 13, 14 which operate the brushes 18, 19 and therefore the brush 20 rotates at a higher speed than the brushes 18, 19, preferably at about double the speed, since such brush 20 is required to perform the important work of cleaning the tip of the teat, as already mentioned.

The use of the teat-washing device according to the invention is extremely easy.

In fact, the user takes hold of the device by the handle 6, in such a way that the lever 10 is positioned upwards, as shown in fig. 2, and therefore can be operated, for example, with the thumb, and the lever 7 is positioned downwards, so as to be able to be operated by the other fingers of the same hand.

The device is therefore moved towards the teat to be cleaned from below, in such a way that the upper opening 22 is positioned exactly corresponding to such teat. Then the brushes 18, 19, 20 are made to rotate by pulling the lever 7 towards the handle 6, thus causing the teat to be sucked towards the brush 20, as previously described. By lowering the lever 10, a continuous spray of liquid against the teat is produced, which can be interrupted by releasing the lever 10. When the washing phase is finished the brushes normally are still kept rotating in order to dry the teats. When this phase is over the lever 7 is released, thus interrupting the rotation of the brushes.

Obviously the operation can be repeated, if necessary.

The device according to the invention, since it acts on one teat at a time, is of very limited size and can easily be used to achieve the pre-established aims.

## Claims

1. A device for washing the teats of the udders of cows or other milk-producing animals, comprising a housing (1) having an opening (22) for introducing a teat thereinto along a direction of teat introduction which is defined as the device is applied to the teat to be washed, a pair of motorized brushes (18,19) mounted in said housing (1) to rotate in opposite directions with their bristles interleaved along said direction of teat introduction, whereby a sucking action occurs on the teat toward the interior of said housing (1), and means (8) for delivering a washing liquid to the brushes characterized in that it includes a third motorized brush (20) also mounted in said housing (1) and positioned beyond said pair of brushes (18,19) with respect to said opening (22).

2. A device according to claim 1, characterized in that it further includes an idle roller (21) mounted in said housing (1) and positioned between said pair of motorized brushes (18,19) and said third motorized brush (20) at one side with respect of said pair of motorized brushes (18,19) and said opening (22).

3. A device according to claim 1 and 2 characterized by the fact that said third motorized brush (20) rotates at a different speed than the brushes of said pair of motorized brushes (18,19).

4. A device according to claim 3, characterized by the fact that said third motorized brush (20) rotates at a higher speed than the brushes of said pair of motorized brushes (18,19).

5. A device according to claims from 1 to 4, characterized in that said housing (1) comprises a first part (3) which is provided with said opening (22) and encloses said pair of brushes (18,19), said third brush (20) and said idle roller (21), and a second part (2), rigidly connectable to said first part (3), which encloses said means (8) for delivering the washing liquid and motor means (11,12,13,14) for actuating said motorized brushes (18,19,20).

6. A device according to claims from 1 to 5, characterized in that said second part (2) of the housing (1) comprises a handle (6) provided with two levers (7,10) for controlling the rotation of the motorized brushes (18,19,20) and the delivering of the washing liquid, respectively.

7. A method for washing and drying the teats of the udders of cows or other milk-producing animals characterized by the combination of introducing the teat to be washed into a housing (1) through an opening (22) thereof along a direction of teat introduction which is defined as the housing (1) is applied to the teat to be washed, causing the teat to be sucked by a pair of counter-rotating motorized brushes (18,19), causing the tip of the teat to divert away from said direction of introduction toward and against a third motorized brush (20), delivering a washing liquid into the working zone of said brushes (18,19,20) for a desired length of time, stopping the delivery of said washing liquid while still keeping the brushes rotating for a time sufficient to dry the teat.

## Patentansprüche

1. Vorrichtung zum Waschen der Sitzen der Euter von Kühen oder anderen Milch erzeugenden Tieren, mit einem Gehäuse (1), das eine Öffnung (22) besitzt, um eine Sitze in einer Zitzeneinführrichtung einzuführen, die durch das Anlegen der Vorrichtung an die zu waschende Zitze definiert ist, mit einem Paar motorisierter Bürsten (18, 19), die im Gehäuse (1) angeordnet sind und in entgegengesetzten Richtungen rotieren, wobei sich deren Borsten längs der Einführrichtung überlappen, so daß eine Saugwirkung auf die Sitze in Richtung zum Inneren des Gehäuses (1) ausgeübt wird, und mit Mitteln (8) zum Zuführen einer Waschflüssigkeit zu den Bürsten dadurch gekennzeichnet, daß eine dritte motorisierte Bürste (20) vorgesehen ist, die auch in dem Gehäuse (1) angeordnet ist und bezogen auf die Öffnung (22) hinter dem Bürstenpaar (18, 19) liegt.

2. Vorrichtung nach Anspruch 1, dadurch gekennzeichnet, daß ferner eine Leerlaufrolle (21) im Gehäuse (1) angeordnet ist, die zwischen dem Paar der motorisierten Bürsten (18, 19) und der dritten motorisierten Bürste liegt und zwar auf einer Seite relativ zu dem Paar der motorisierten Bürsten (18, 19) und der Öffnung (22).

3. Vorrichtung nach den Ansprüchen 1 und 2, dadurch gekennzeichnet, daß die dritte motorisierte Bürste (20) mit einer unterschiedlichen Geschwindigkeit gegenüber den Bürsten des Paares der motorisierten Bürsten (18, 19) rotiert.

4. Vorrichtung nach Anspruch 3, dadurch gekennzeichnet, daß die dritte motorisierte Bürste (20) mit einer höheren Geschwindigkeit rotiert als die Bürsten des Paares der motorisierten Bürsten (18, 19).

5. Vorrichtung nach den Ansprüchen 1 bis 4, dadurch gekennzeichnet, daß das Gehäuse (1) einen ersten Teil (3) aufweist, der mit der Öffnung (22) versehen ist und das Bürstenpaar (18, 19), die dritte Bürste (20) und die Leerlaufrolle (21) umfaßt und aus einem zweiten Teil (2), der fest mit dem ersten Teil (3) verbindbar ist, der die Mittel (8) zur Zufuhr der Waschflüssigkeit und Motoren (11, 12, 13, 14) zum Antrieb der motorisierten Bürsten (18, 19, 20) umfaßt.

6. Vorrichtung nach den Ansprüchen 1 bis 5, dadurch gekennzeichnet, daß der zweite Teil (2) des Gehäuses (1) einen Handgriff (6) aufweist, der mit zwei Hebeln (7, 10) jeweils zur Steuerung der Rotation der motorisierten Bürsten (18, 19, 20) bzw. der Zufuhr der Waschflüssigkeit versehen ist.

7. Verfahren zum Waschen und Trocknen der Sitzen der Euter von Kühen oder anderen Milch produzierenden Tieren, gekennzeichnet durch die Kombination des Einführens der zu waschenden Zitze durch eine Öffnung (22) in ein Gehäuse (1) und zwar längs einer Zitzeneinführrichtung, die durch das Anlegen des Gehäuses (1) an die zu waschende Zitze definiert ist, des Veranlassens, daß die Zitze durch ein paar gegensinning rotierender motorisierter Bürsten (18, 19) eingezogen wird, des Veranlassens, daß die Spitze der Zitze sich aus der Einführrichtung herausbewegt und sich an eine dritte motorisierte Bürste (20) anlegt, sowie durch Zuführen einer Waschflüssigkeit in den Arbeitsbereich der Bürsten (18, 19, 20) über eine gewünschte Zeitspanne, Abstoppen der Zufuhr der Waschflüssigkeit, während die Bürsten aber noch für eine Zeit, die ausreichend zum Trocknen der Zitze ist, in Rotation gehalten werden.

## Revendications

1. Dispositif pour le lavage des tettes des pis de vaches ou d'autres animaux laitiers, comprenant un carter (1) comportant une ouverture (22) pour l'introduction d'une tette selon un sens d'introduction de tette qui est défini lorsque le dispositif est appliqué contre la tette à laver, une paire de brosses (18, 19) actionnées par moteur et montées dans ledit carter (1) de manière à tourner dans des sens opposés, leurs poils se recouvrant partiellement dans ledit sens d'introduction de tette, une action de succion étant exercée sur la tette en direction de l'intérieur dudit carter (1), et un moyen (8) pour fournir un liquide de lavage aux brosses, caractérisé en ce qu'il comprend une troisième brosse (20) actionnée par moteur, également montée dans ledit carter (1) et placée au-delà de ladite paire de brosses (18, 19) par rapport à ladite ouverture (22).

2. Dispositif selon la revendication 1, caractérisé en ce qu'il comprend en outre un galet intermédiaire (22) monté dans ledit carter (1) et placé entre ladite paire de brosses (18, 19) actionnées par moteur et ladite troisième brosse (20) actionnée par moteur, sur un côté par rapport à ladite paire de brosses (18, 19) actionnées par moteur et par rapport à ladite ouverture (22).

3. Dispositif selon la revendication 1 et 2, caractérisé par le fait que ladite troisième brosse (20) actionnée par moteur tourne à une vitesse différente de celle des brosses de ladite paire de brosses (18, 19) actionnées par moteur.

4. Dispositif selon la revendication 3, caractérisé par le fait que ladite troisième brosse (20) actionnée par moteur tourne à une vitesse supérieure à celle des brosses de ladite paire de brosses (18, 19) actionnées par moteur.

5. Dispositif selon les revendications 1 à 4, caractérisé en ce que ledit carter (1) comprend une première partie (3) qui comporte ladite ouverture (22) et renferme ladite paire de brosses (18, 19) ladite troisième brosse (20) et ledit galet intermédiaire (21), et une seconde partie (2) pouvant être rigidement fixée à ladite première partie (3), et logeant ledit moyen (8) pour fournir le liquide de lavage et les moyens moteurs (11, 12, 13, 14) pour la commande desdites brosses (18, 19, 20) actionnées par moteur.

6. Dispositif selon les revendications 1 à 5, caractérisé en ce que ladite seconde partie (2) du carter (1) comporte une poignée (6) munie de deux manettes (7, 10) respectivement pour la commande de la rotation des brosses (18, 19, 20) actionnées par moteur et pour l'alimentation en liquide de lavage.

7. Procédé pour laver et sécher les tettes des pis de vaches ou d'autres animaux laitiers, caractérisé par la combinaison des étapes consistant à introduire la tette à laver dans un carter (1) par l'intermédiaire d'une ouverture (22) de celui-ci selon un sens d'introduction de tette qui est défini lorsque le carter (1) est appliqué contre la tette à laver, à provoquer la succion de la tette par une paire de brosses (18, 19) actionnées par moteur et tournant en sens contraire l'une par rapport à l'autre, à provoquer la déviation de la pointe de la tette par rapport audit sens d'introduction en direction d'une troisième brosse (20) actionnée par moteur, et contre celle-ci, à fournir un liquide de lavage dans la zone d'action desdites brosses (18, 19, 20) pendant une durée désirée, à arrêter l'amenée dudit liquide de lavage tout en maintenant les brosses en rotation pour une durée permettant le séchage de la tette.
